# EUROPEAN PATENT SPECIFICATION

(11) **EP 4 086 292 B1**
(45) Date of publication and mention of the grant of the patent: **31.01.2024**
(21) Application number: 21754651.4
(22) Date of filing: 09.02.2021
(51) Int. Cl.: C08F 220/40, C08F 220/18, C08F 220/14, C09D 133/10, C09D 133/12, C08K 5/37, C08L 33/10

(54) **CURING COMPOSITION AND CURED OBJECT USING SAME**
HÄRTUNGSZUSAMMENSETZUNG UND GEHÄRTETER GEGENSTAND DAMIT
COMPOSITION DURCISSABLE ET OBJET DURCI L'UTILISANT

(30) Priority: 12.02.2020 JP 2020021877
(43) Date of publication of application: 09.11.2022
(73) Proprietor: Kuraray Co., Ltd., Kurashiki-shi, Okayama 710-0801 (JP)
(72) Inventor: NOGUCHI, Daiki, Tainai-shi, Niigata 959-2691 (JP); FUKUMOTO, Takashi, Tainai-shi, Niigata 959-2691 (JP); KATO, Naoya, Tainai-shi, Niigata 959-2691 (JP)
(74) Representative: D Young & Co LLP
(86) International application number: PCT/JP2021/004770
(87) International publication number: WO 2021/161993

(56) References cited:
- WO-A1-2019/084754
- JP-A- 2003 277 572
- JP-A- 2009 179 781
- JP-A- 2009 509 014
- JP-A- 2013 011 875
- JP-A- 2013 029 709
- US-A- 4 581 401

## Description

### Technical Field

The present invention relates to a curable composition containing a polymer including a particular structure having an unsaturated double bond, and to a cured product using the composition.

### Background Art

Crosslinking is one of effective methods to improve mechanical properties, heat resistance, solvent resistance, etc. for various polymer materials. Methods for obtaining a crosslinked polymer material include a method which involves curing a crosslinkable composition containing a compound having a polymerizable functional group, and a method which involves curing a crosslinkable composition, containing an isocyanate and a hydroxy compound, through the formation of a urethane bond.

Crosslinking is one of effective methods also for performing a surface modification of a polymer material. An exemplary surface modification method involves applying a crosslinkable composition as described above in liquid form, containing an organic solvent, to a substrate and drying the composition, followed by heating to crosslink the composition (see, e.g., patent documents 1 to 7).

### Citation List

### Patent Literature

Patent document 1: JP 2018-002972 A
Patent document 2: JP 2018-020442 A
Patent document 3: JP 2018-020569 A
Patent document 4: JP 2018-028049 A
Patent document 5: JP 2008-297350 A Patent Document 6: US 4581401 A
Patent Document 7: JP 2013029709 A

### Summary of Invention

### Technical Problem

When a crosslinkable compound, such as a polyfunctional methacrylate as described in patent document 5, is used in a large amount in the above-described crosslinkable composition, a cured product of the composition has a high hardness. However, the crosslinking density of the cured product is too high, so that the cured product has poor flexibility. When such a crosslinkable composition is excessively crosslinked and hardened upon the application of the composition to a substrate to produce a cured film, it is possible that the cured product cannot follow the movement of the substrate as it expands or contracts e.g. due to heat, resulting in breakage of the cured product.

When the crosslinking degree of a cured product is reduced to enhance the flexibility so that it can follow the movement of a substrate, the cured product may be so soft that it causes the problem of sticking or the problem of being incapable of functioning as a coating material.

It is, therefore, an object of the present invention to provide a curable composition which is excellent in curability and which can provide a cured product having excellent flexibility, and to provide a cured product obtained by curing the curable composition.

### Solution to Problem

The present inventors, through intensive studies to achieve the object, have found that a curable composition, comprising a polymer including a particular structure having an unsaturated double bond, and a particular polythiol compound, shows excellent curability when it is cured, and that the cured product has good flexibility. The present invention has been accomplished based on this finding.

Thus, the present invention provides the following [1] to [8].
[1] A curable composition comprising a polymer (A) including a structural unit represented by the following general formula (I), and a polythiol compound (B) having at least two thiol groups in one molecule: 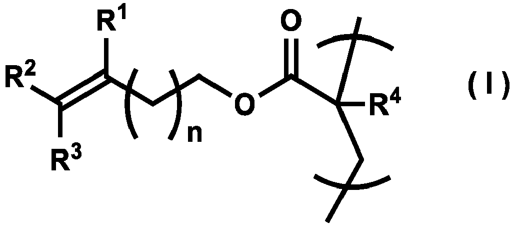 wherein R¹, R² and R³ each independently represent a hydrogen atom, an alkyl group having 1 to 18 carbon atoms, an alkenyl group having 2 to 18 carbon atoms or an aralkyl group having 7 to 18 carbon atoms, R⁴ represents a hydrogen atom or a methyl group, and n is an arbitrary integer equal to or greater than 0, and wherein at least one of R¹, R² and R³ is one of the above groups having one or more carbon atoms and/or n is an integer equal to or greater than 1.
[2] The curable composition as described in [1] above, wherein in the general formula (I), n is 1 to 5.
[3] The curable composition as described in [1] or [2] above, wherein in the general formula (I), R² and R³ are each a hydrogen atom.
[4] The curable composition as described in any one of [1] to [3] above, wherein in the general formula (I), R¹ is an alkyl group having 1 to 3 carbon atoms.
[5] The curable composition as described in [1] above, wherein the structural unit represented by the general formula (I) is a structural unit represented by the following general formula (II): 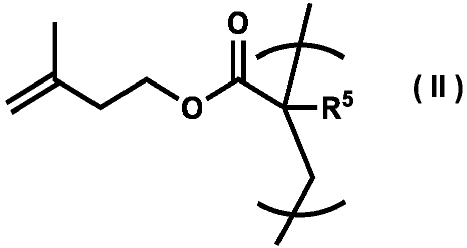 wherein R⁵ represents a hydrogen atom or a methyl group.
[6] The curable composition as described in any one of [1] to [5] above, wherein the polymer (A) includes a structural unit derived from a radical polymerizable monomer.
[7] The curable composition as described in any one of [1] to [6] above, further comprising a radical polymerization initiator (C).
[8] A cured product obtained by curing the curable composition as described in any one of [1] to [7] above.

### Advantageous Effects of Invention

The present invention makes it possible to provide a curable composition which is excellent in curability and which can provide a cured product having excellent flexibility, and to provide a cured product obtained by curing the curable composition.

### Description of Embodiments

### [Curable Composition]

The curable composition of the present invention comprises a polymer (A) including a structural unit represented by the below-described general formula (I), and a polythiol compound (B) having at least two thiol groups in one molecule. Because of the use of the particular polymer having an unsaturated double bond in the curable composition of the present invention, a cured product of the composition has good flexibility. In addition, because of the inclusion of the polythiol compound, the curable composition of the present invention has excellent curability.

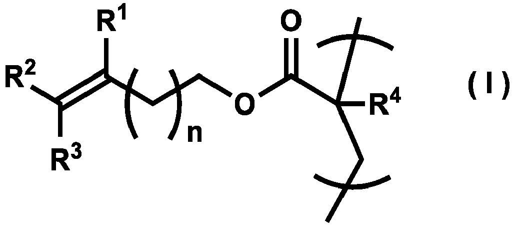

In the general formula (I), R¹, R² and R³ each independently represent a hydrogen atom, an alkyl group having 1 to 18 carbon atoms, an alkenyl group having 2 to 18 carbon atoms or an aralkyl group having 7 to 18 carbon atoms, and R⁴ represents a hydrogen atom or a methyl group. n is an arbitrary integer equal to or greater than 0. In addition, at least one of R¹, R² and R³ is one of the above groups having one or more carbon atoms and/or n is an integer equal to or greater than 1.

### <Polymer (A) Including a Structural Unit Represented by the General Formula (I)>

The curable composition of the present invention contains the polymer (A) including a structural unit represented by the general formula (I) (hereinafter also referred to simply as the "polymer (A)"). Because of the inclusion of the polymer (A) in the curable composition of the present invention, a cured product of the composition has enhanced flexibility.

### [Structural Unit Represented by the General Formula (I)]

In the general formula (I), R¹, R² and R³ each independently represent a hydrogen atom, an alkyl group having 1 to 18 carbon atoms, an alkenyl group having 2 to 18 carbon atoms or an aralkyl group having 7 to 18 carbon atoms.

The alkyl group having 1 to 18 carbon atoms, represented by R¹, R² and R³, is preferably an alkyl group having 1 to 10 carbon atoms, more preferably an alkyl group having 1 to 6 carbon atoms. Examples of the alkyl group include a methyl group, an ethyl group, an n-propyl group, an isopropyl group, an n-butyl group, an isobutyl group, a sec-butyl group, a tert-butyl group, an n-pentyl group, an isopentyl group, a neopentyl group, an n-hexyl group, a cyclopropyl group, a cyclobutyl group, a cyclopentyl group, and a cyclohexyl group.

The alkenyl group having 2 to 18 carbon atoms, represented by R¹, R² and R³, is preferably an alkenyl group having 2 to 10 carbon atoms, more preferably an alkenyl group having 2 to 6 carbon atoms. Examples of the alkenyl group include a vinyl group, an allyl group, a propenyl group, an isopropenyl group, a butenyl group, an isobutenyl group, a pentenyl group, a hexenyl group (such as a cis-3-hexenyl group), and a cyclohexenyl group.

The aralkyl group having 7 to 18 carbon atoms, represented by R¹, R² and R³, is preferably an aralkyl group having 7 to 14 carbon atoms. Examples of the aralkyl group include a benzyl group, a 2-phenylethyl group, a 2-naphthylethyl group, and a diphenylmethyl group.

Preferably, R¹, R² and R³ are each independently a hydrogen atom, an alkyl group having 1 to 6 carbon atoms, or an alkenyl group having 2 to 6 carbon atoms from the viewpoint of enhancing the flexibility of a cured product of the composition. R¹ is more preferably an alkyl group having 1 to 3 carbon atoms or a hydrogen atom, even more preferably a methyl group or a hydrogen atom, and still more preferably a methyl group. R² and R³ are each more preferably a hydrogen atom.

R⁴ represents a hydrogen atom or a methyl group, and is preferably a methyl group from the viewpoint of enhancing the surface hardness of a cured product of the composition.
n is an arbitrary integer equal to or greater than 0, and is preferably 1 to 5, more preferably 1 to 3, and even more preferably 1 or 2 from the viewpoint of enhancing the flexibility of a cured product of the composition.

In the polymer (A) including a structural unit represented by the general formula (I), at least one of R¹, R² and R³ is one of the above-described groups having one or more carbon atoms and/or n is an integer equal to or greater than 1. Preferably, at least one of R¹, R² and R³ is one of the above-described groups having one or more carbon atoms and n is an integer equal to or greater than 1. In particular, the structural unit represented by the general formula (I) is more preferably a structural unit represented by the following general formula (II):

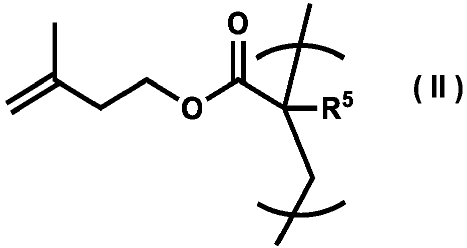

In the formula (II), R⁵ represents a hydrogen atom or a methyl group, and is preferably a methyl group.

The structure represented by the general formula (I) and the structure represented by the general formula (II) can be obtained, for example, by subjecting a (meth)acrylic acid and an alcohol having the corresponding unsaturated double bond structure to a known esterification reaction, and then polymerizing the resulting compound as a monomer.

The amount of the structural unit represented by the general formula (I) in the polymer (A) is preferably 1 to 100 mol %. When the amount of the structural unit represented by the general formula (I) is within the above range, it is possible to achieve both good curability of the composition and good flexibility of a cured product. From this viewpoint, the amount of the structural unit represented by the general formula (I) in the polymer (A) is more preferably 5 to 100 mol %, even more preferably 7 to 60 mol %, and still more preferably 10 to 50 mol %.

### [Radical Polymerizable Monomer]

Besides the structure represented by the general formula (I), the polymer (A) may include a structural unit derived from a radical polymerizable monomer.

Examples of the radical polymerizable monomer include a vinyl monomer, such as styrene, 2-methylstyrene, vinyl acetate, or vinyl chloride; an alkyl (meth)acrylate, such as methyl (meth)acrylate, propyl (meth)acrylate, butyl (meth)acrylate, pentyl (meth)acrylate, hexyl (meth)acrylate, or 2-ethylhexyl (meth)acrylate; a (meth)acrylic ester having a ring structure, such as cyclohexyl (meth)acrylate, dicyclopentanyl (meth)acrylate, dicyclopentenyl (meth)acrylate, dicyclopentenyloxyethyl (meth)acrylate, adamantyl (meth)acrylate, 3-hydroxyadamantyl (meth)acrylate, or 2-methyl-2-adamantyl (meth)acrylate; a (meth)acrylic ester having a hydroxy group, such as 2-hydroxyethyl (meth)acrylate, hydroxypropyl (meth)acrylate, hydroxybutyl (meth)acrylate, or a caprolactone-modified 2-hydroxyethyl (meth)acrylate; a (meth)acrylate having an alkylene glycol structure, such as methoxydiethylene glycol (meth)acrylate, ethoxydiethylene glycol (meth)acrylate, isooctyloxydiethylene glycol (meth)acrylate, phenoxytriethylene glycol (meth)acrylate, methoxytriethylene glycol (meth)acrylate, or methoxypolyethylene glycol (meth)acrylate; a silane- or silyl-terminated (meth)acrylate, such as 2-trimethylsilyloxyethyl (meth)acrylate; a (meth)acrylic ester having a terminal epoxy group, such as glycidyl (meth)acrylate or 3,4-epoxycyclohexylmethyl (meth)acrylate; and an unsaturated dicarboxylic acid, such as maleic anhydride or a derivative thereof.

The radical polymerizable monomer may be a compound having two or more polymerizable groups in the molecule. Examples of such a compound include ethylene glycol di(meth)acrylate, diethylene glycol di(meth)acrylate, dipropylene glycol di(meth)acrylate, tripropylene glycol di(meth)acrylate, 1,3-butanediol di(meth)acrylate, 1,4-butanediol di(meth)acrylate, 1,6-hexamethylene di(meth)acrylate, neopentyl glycol di(meth)acrylate, 1,9-nonanediol di(meth)acrylate, 1,10-decanediol di(meth)acrylate, tricyclodecanedimethanol di(meth)acrylate, glycerin di(meth)acrylate, di(meth)acrylate of hydrogenated bisphenol A or hydrogenated bisphenol F, polyethylene glycol di(meth)acrylate, polypropylene glycol di(meth)acrylate, pentaerythritol tetra(meth)acrylate, dipentaerythritol hexa(meth)acrylate, and trimethylolpropane tri(meth)acrylate.

Amulti-(meth)acrylate having one or more hydroxy groups can also be used. Examples of the multi-(meth)acrylate include glycerol di(meth)acrylate, trimethylolpropane di(meth)acrylate, pentaerythritol tri(meth)acrylate, pentaerythritol di(meth)acrylate, and dipentaerythritol monohydroxypenta(meth)acrylate.

When the polymer (A) includes the structural unit derived from a radical polymerizable monomer, there is no particular limitation placed on the amount of the structural unit; however, it is preferably 0.1 to 95 mol %, more preferably 10 to 90 mol %, and even more preferably 50 to 90 mol %. When the amount of the structural unit derived from a radical polymerizable monomer is within the above range, the flexibility of a cured product can be enhanced while enhancing the curability of the composition.

While there is no particular limitation on the weight average molecular weight (Mw) of the polymer (A), it is preferably 5,000 to 500,000. When the weight average molecular weight of the polymer (A) is equal to or higher than the lower limit, the hardness of a cured product of the composition can be enhanced. On the other hand, when the weight average molecular weight of the polymer (A) is equal to or lower than the upper limit, good flexibility of a cured product can be ensured. From these viewpoints, the weight average molecular weight (Mw) of the polymer (A) is preferably 10,000 to 400,000, more preferably 12,000 to 300,000.

From the same viewpoints, the number average molecular weight (Mn) of the polymer (A) is preferably 2,000 to 50,000, more preferably 4,000 to 30,000, and even more preferably 5,000 to 20,000.

The weight average molecular weight and the number average molecular weight herein can be measured by the method described in Examples below.

While there is no particular limitation on the iodine value of the polymer (A), it is preferably 10 to 180. When the iodine value is equal to or higher than the lower limit, the amount of residual double bonds is relatively large, leading to enhanced curability of the composition. On the other hand, when the iodine value is equal to or lower than the upper limit, a cured product of the composition is unlikely to be excessively crosslinked, and therefore the cured product has enhanced flexibility. From these viewpoints, the iodine value of the polymer (A) is preferably 15 to 170, more preferably 20 to 160.

The iodine value herein can be measured by the method described in Japanese Pharmacopoeia 17th Edition, General Tests, Fats and Fatty Oils Test, Iodine value.

The content of the polymer (A) in the curable composition of the present invention is preferably 10 to 60% by mass. When the content of the polymer (A) is equal to or higher than the lower limit, a cured product of the composition has appropriate flexibility. When the content of the polymer (A) is equal to or lower than the upper limit, a cured product of the composition can be prevented from being excessively hard. From these viewpoints, the content of the polymer (A) in the curable composition of the present invention is preferably 20 to 55% by mass, more preferably 30 to 50% by mass.

### <Polythiol Compound (B) Having at Least Two Thiol Groups in One Molecule>

The curable composition of the present invention contains the polythiol compound (B) having at least two thiol groups in one molecule (hereinafter also referred to simply as the "polythiol compound (B)"). The use of the polythiol compound (B) in the present invention enhances the curability of the composition.

The number of mercapto groups of the polythiol compound (B) usable in the present invention is preferably 3 or more, more preferably 4 or more and, from the viewpoint of availability, is preferably 7 or less, more preferably 6 or less.

The polythiol compound (B) may be an aliphatic polythiol compound or a cyclic polythiol compound having a hetero ring or an aromatic ring. An aliphatic polythiol compound is preferred from the viewpoint of enhancing the curability of the composition.

Examples of the aliphatic thiol compound include 1,2,3-tris(mercaptomethylthio)propane, 1,2,3-tris(2-mercaptoethylthio)propane, 1,2,3-tris(3-mercaptopropylthio)propane, trimethylolpropane tris(2-mercaptoacetate), glycerin tris(2-mercaptoacetate), pentaerythritol tetrakis(2-mercaptoacetate), dipentaerythritol pentakis(2-mercaptoacetate), dipentaerythritol hexakis(2-mercaptoacetate), trimethylolpropane tris(3-mercaptopropionate), pentaerythritol tetrakis(3-mercaptopropionate), dipentaerythritol hexakis(3-mercaptopropionate), trimethylolpropane tris(3-mercaptobutylate), pentaerythritol tetrakis(3-mercaptobutylate), and dipentaerythritol hexakis(3-mercaptobutylate).

Examples of the thiol compound having a hetero ring include tris[(3-mercaptopropionyloxy)-ethyl] isocyanurate, tris[(3-mercaptobutyryloxy)-ethyl] isocyanurate, (1,3,5-tris(3-mercaptobutyryloxyethyl)-1,3,5-triazine-2,4,6(1H,3H,5H)-trione), and tris[(3-mercaptopropionyloxy)-methyl] isocyanurate.

Examples of the thiol compound having an aromatic ring include 1,2,3-trimercaptobenzene 1,2,4-trimercaptobenzene 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,3,5-tris(mercaptoethyl)benzene, 1,2,4-tris(mercaptoethyl)benzene, and 1,2,3,4-tetramercaptobenzene.

Among the thiol compounds listed above is preferably at least one selected from pentaerythritol tetrakis(3-mercaptopropionate), trimethylolpropane tris(3-mercaptopropionate), 1,3,5-tris(3-mercaptobutyryloxyethyl)-1,3,5-triazine-2,4,6(1H,3H,5H)-trione, dipentaerythritol hexakis(3-mercaptopropionate), and tris[(3-mercaptopropionyloxy)-ethyl] isocyanurate, more preferably at least one selected from pentaerythritol tetrakis(3-mercaptopropionate) and dipentaerythritol hexakis(3-mercaptopropionate), and even more preferably pentaerythritol tetrakis(3-mercaptopropionate).

In the curable composition of the present invention, the ratio of the mole number of double bonds in the polymer (A) to the mole number of thiol groups ([moles of double bonds in polymer (A)]/[moles of thiol groups]) is preferably 0.1 to 10. When the ratio is equal to or lower than the upper limit, the curability of the composition can be enhanced. When the ratio is equal to or higher than the lower limit, a cured product of the composition can have good flexibility. From these viewpoints, the ratio is more preferably 0.5 to 5, even more preferably 0.8 to 2.

### <Radical Polymerization Initiator (C)>

The curable composition of the present invention may contain a radical polymerization initiator and, from the viewpoint of enhancing the curability, preferably contains a radical polymerization initiator (C). There is no particular limitation on the type of the radical polymerization initiator (C), and it may be appropriately selected depending on the types of the polymer (A) and the polythiol compound (B) used, etc. The radical polymerization initiator (C) includes a thermal radical polymerization initiator that generates a radical by heat, and a photo-radical polymerization initiator that generates a radical when irradiated with light.

Examples of the thermal radical polymerization initiator include an azobis compound such as 2,2'-azobisisobutyronitrile (AIBN) or 2,2'-azobis(2,4-dimethylvalero)nitrile (ADVN), and organic peroxides including: a diacyl peroxide such as benzoyl peroxide; a peroxy ester such as t-butyl peroxybenzoate; a hydroperoxide such as cumene hydroperoxide; a dialkyl peroxide such as dicumyl peroxide; a ketone peroxide such as methyl ethyl ketone peroxide or acetylacetone peroxide; a peroxyketal; an alkyl perester; and a percarbonate.

A commercially available product can be used as the photo-radical polymerization initiator. Examples may include Irgacure (registered trademark) 651, Irgacure 184, Irgacure 2959, Irgacure 127, Irgacure 907, Irgacure 369, Irgacure 379, Irgacure 819, Irgacure 784, Irgacure OXE 01, Irgacure OXE 02 and Irgacure 754, all manufactured by BASF Corporation. These products may be used either singly or in a combination of two or more.

There is no particular limitation on the content of the radical polymerization initiator (C) in the curable composition of the present invention; however, from the viewpoint of efficient polymerization, it is preferably 0.001 parts by mass or more, more preferably 0.01 parts by mass or more, and even more preferably 0.1 parts by mass or more per 100 parts by mass of the total amount of the polymer (A) and the polythiol compound (B), while it is preferably 5 parts by mass or less, more preferably 3 parts by mass or less.

### <Solvent>

The curable composition of the present invention may further contain a solvent depending on the intended use. The inclusion of the solvent enables uniform dispersion of the components, leading to improved handling of the composition.

Examples of the solvent usable in the present invention include an aromatic hydrocarbon such as toluene, xylene, or ethyl benzene; an alicyclic hydrocarbon such as cyclopentane, cyclohexane, methylcyclohexane, decalin, or tetralin; and an aliphatic hydrocarbon such as pentane, hexane, heptane, or octane. Among them, toluene and xylene are preferred.

When the curable composition contains the solvent, the content is preferably 10 to 70% by mass, more preferably 20 to 60% by mass, and even more preferably 30 to 55% by mass.

### <Other Components>

The curable composition of the present invention may further contain components other than the above-described components, such as a diluent, a pigment, a dye, a filler, an ultraviolet absorber, a thickener, a shrinkage reducing agent, an anti-aging agent, a plasticizer, an aggregate, a flame retardant, a stabilizer, a fibrous reinforcing agent, an antioxidant, a leveling agent, and an anti-sagging agent.

### <Curable Composition Production Method>

There is no particular limitation on a method for producing the curable composition of the present invention. For example, the composition can be produced by mixing the polymer (A) and the polythiol compound (B), and optionally the radical polymerization initiator (C), a solvent and other component(s) by a known method.

### [Cured Product]

The cured product of the present invention is one obtained by curing the above-described curable composition and having appropriate flexibility.

There is no particular limitation on a method for producing the cured product of the present invention, and it can be appropriately selected depending on the type of the curable composition, the type of the radical polymerization initiator, etc. For example, when the curable composition of the present invention contains a thermal radical polymerization initiator, the cured product can be produced by a method which involves curing the composition by heating it. When the curable composition of the present invention contains a photo-radical polymerization initiator, the cured product can be produced by a method which involves curing the composition by irradiating it with active energy rays such as UV rays.

### [Application of Curable Composition and Cured Product]

There is no particular limitation on the application of the curable composition and the cured product of the present invention. For example, because of the appropriated flexibility of the cured product of the present invention, the curable composition of the present invention can be preferably used for a paint (such as a UV paint or a UV ink), an adhesive or a coating material, and can provide a cured product, such as a paint film, an adhesive layer or a coating layer, having excellent physical properties and appearance.

### Examples

The following examples illustrate the present invention in greater detail and are not intended to limit the scope of the invention.

The following measuring methods are used in Examples and Comparative Examples.

### <Weight Average Molecular Weight and Number Average Molecular Weight>

For each of the polymers obtained in the below-described Production Examples and Comparative Production Examples, the weight average molecular weight and the number average molecular weight were measured by gel permeation chromatography (GPC) under the following conditions, followed by calculation in terms of a standard polystyrene.
Apparatus: HLC-8220 GPC, manufactured by Tosoh Corporation
Eluent: tetrahydrofuran
Column: three TSKgel SuperHM-N columns (inner diameter 6 mm, effective length 15 cm) manufactured by Tosoh Corporation, connected in series
Column temp.: 40°C
Detector: RI
Liquid feed rate: 0.60 mL/min

### <Iodine Value>

For each of the polymers obtained in the Production Examples and the Comparative Production Examples, the iodine value was measured by the method described in Japanese Pharmacopoeia 17th Edition, General Tests, Fats and Fatty Oils Test, Iodine value.

### [Production Example 1] Synthesis of Polymer (A-1)

Under a flow of nitrogen gas, 100 g of toluene, 55.0 g of a compound 1 represented by the below-described formula (II-1) (356 mmol, manufactured by Kuraray Co., Ltd.), 70.6 g of 2-ethylhexyl methacrylate (EHMA) (356 mmol, manufactured by FUJIFILM Wako Pure Chemical Corporation), 0.20 g of 1-normal octane thiol (1.37 mmol, manufactured by FUJIFILM Wako Pure Chemical Corporation), and 2.91 g of AIBN (17.7 mmol, manufactured by FUJIFILM Wako Pure Chemical Corporation) were placed into a reactor equipped with a stirrer, a thermometer and a reflux tube, and the mixture was stirred.

After stirring the mixture for 3 hours while keeping the temperature in the reactor at 80°C, the resulting polymer solution was cooled. 1000 ml of methanol was added to the solution, and then the precipitated polymer was filtered and dried to obtain a polymer (A-1).

The polymer (A-1) had a weight average molecular weight (Mw) of 266,000 and a number average molecular weight (Mn) of 16,000. The amount of residual double bonds in the polymer (A-1) was 70.2 in terms of the iodine value.

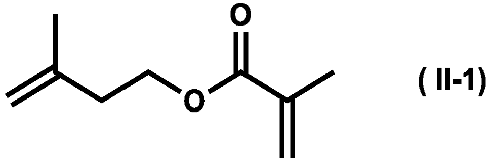

### [Production Example 2] Synthesis of Polymer (A-2)

Polymerization was carried out in the same manner as in Production Example 1 except for changing the amount of the compound 1 to 18.3 g (119 mmol), and using 106.7 g of methyl methacrylate (MMA) (1066 mmol, manufactured by Kuraray Co., Ltd.) instead of 2-ethylhexyl methacrylate to obtain a polymer (A-2).

The polymer (A-2) had a weight average molecular weight (Mw) of 60,300 and a number average molecular weight (Mn) of 15,300. The amount of residual double bonds in the polymer (A-2) was 25.3 in terms of the iodine value.

### [Production Example 3] Synthesis of Polymer (A-3)

Polymerization was carried out in the same manner as in Production Example 1 except for using 2.3 g of a compound 2 represented by the below-described formula (II-2) (11 mmol, manufactured by Kuraray Co., Ltd.) instead of the compound 1, and using 10.3 g of methyl methacrylate (103 mmol, manufactured by Kuraray Co., Ltd.) instead of 2-ethylhexyl methacrylate to obtain a polymer (A-3).

The polymer (A-3) had a weight average molecular weight (Mw) of 14,500 and a number average molecular weight (Mn) of 7,000. The amount of residual double bonds in the polymer (A-3) was 25.3 in terms of the iodine value.

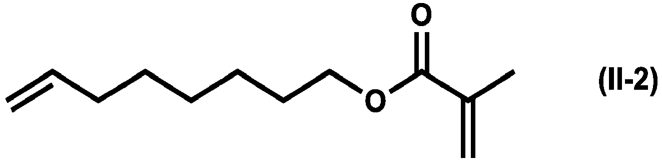

### [Production Example 4] Synthesis of Polymer (A-4)

Polymerization was carried out in the same manner as in Production Example 1 except for changing the amount of the compound 1 to 7.7 g (50 mmol), and using 117.3 g of FA-512M (447 mmol, dicyclopentenyloxyethyl methacrylate, manufactured by Hitachi Chemical Co., Ltd.) instead of 2-ethylhexyl methacrylate to obtain a polymer (A-4).

The polymer (A-4) had a weight average molecular weight (Mw) of 62,300 and a number average molecular weight (Mn) of 18,300. The amount of residual double bonds in the polymer (A-4) was 70.2 in terms of the iodine value.

### [Production Example 5] Synthesis of Polymer (A-5)

Polymerization was carried out in the same manner as in Production Example 1 except for changing the amount of the compound 1 to 4.7 g (31 mmol), and using 7.9 g (30 mmol) of FA-512M instead of 2-ethylhexyl methacrylate to obtain a polymer (A-5).

The polymer (A-5) had a weight average molecular weight (Mw) of 21,000 and a number average molecular weight (Mn) of 5,700. The amount of residual double bonds in the polymer (A-5) was 52.3 in terms of the iodine value.

### [Production Example 6] Synthesis of Polymer (A-6)

Polymerization was carried out in the same manner as in Production Example 1 except for changing the amount of the compound 1 to 40.1 g (260 mmol), and not using 2-ethylhexyl methacrylate to obtain a polymer (A-6).

The polymer (A-6) had a weight average molecular weight (Mw) of 52,700 and a number average molecular weight (Mn) of 16,600. The amount of residual double bonds in the polymer (A-6) was 155.7 in terms of the iodine value.

### [Comparative Production Example 1] Synthesis of Polymer (E-1)

Polymerization was carried out in the same manner as in Production Example 1 except for using 71.3 g of FA-512M (272 mmol, dicyclopentenyloxyethyl methacrylate, manufactured by Hitachi Chemical Co., Ltd.) instead of the compound 1, and changing the amount of 2-ethylhexyl methacrylate to 53.9 g (272 mmol) to obtain a polymer (E-1).

The polymer (E-1) had a weight average molecular weight (Mw) of 34,600 and a number average molecular weight (Mn) of 13,300. The amount of residual double bonds in the polymer (E-1) was 52.3 in terms of the iodine value.

### [Comparative Production Example 2] Synthesis of Polymer (E-2)

Polymerization was carried out in the same manner as in Production Example 1 except for using 28.2g (108 mmol) of FA-512M instead of the compound 1, and using 96.8 g of methyl methacrylate (967 mmol, manufactured by Kuraray Co., Ltd.) instead of 2-ethylhexyl methacrylate to obtain a polymer (E-2).

The polymer (E-2) had a weight average molecular weight (Mw) of 21,800 and a number average molecular weight (Mn) of 10,700. The amount of residual double bonds in the polymer (E-2) was 25.3 in terms of the iodine value.

### [Comparative Production Example 3] Synthesis of Polymer (E-3)

Polymerization was carried out in the same manner as in Production Example 1 except for using 40.1g (153 mmol) of FA-512M instead of the compound 1, and not using 2-ethylhexyl methacrylate to obtain a polymer (E-3).

The polymer (E-3) had a weight average molecular weight (Mw) of 14,800 and a number average molecular weight (Mn) of 6,400. The amount of residual double bonds in the polymer (E-3) was 90.8 in terms of the iodine value.

### [Examples 1 to 6 and Comparative Examples 1 to 3] Preparation of Curable Composition and Synthesis of Cured Film

Each of the polymers produced in Production Examples 1 to 6 and Comparative Production Examples 1 to 3, a polythiol compound, a solvent, and a radical polymerization initiator were placed into a sample bottle in the amounts indicated in Table 1, and the mixture was stirred and mixed to obtain a curable composition.

Subsequently, the resulting curable composition was applied to a tinplate specimen in a thickness of 125 µm, and the composition was heated at 150°C for 10 minutes to cure the composition. The resulting cured film was evaluated for its solvent resistance (wiping test), flex resistance and surface hardness by the following methods. The evaluation results are shown in Table 1.

For a coating film which was rated "B" in the solvent resistance test, the film was determined to be uncured, and was not evaluated for its flex resistance and surface hardness.

### <Solvent Resistance (Wiping Test)>

The cured film on the specimen was wiped with cotton impregnated with acetone, and the state of the surface of the specimen after wiping was evaluated in accordance with the following criteria. A "pass" rating indicates that the composition has excellent curability.
G (good, pass): the cured film remained unwiped
B (bad, fail): the cured film was wiped off

### <Flex Resistance>

The flex resistance test was performed according to JIS K5600-5-1:1999, and evaluated in terms of a mandrel diameter (mm) at which a crack was formed in the coating film. A smaller mandrel diameter indicates better flex resistance; a mandrel diameter of 25 mm or less was rated "pass".

### <Surface Hardness>

The surface hardness test was performed according to JIS K5600-5-4:1999, and evaluated in terms of the hardness of a pencil lead at which a cohesion failure occurred in the coating film. A higher pencil hardness indicates higher hardness and thus higher scratch resistance of the surface of the coating film. A surface hardness of B or higher was rated "pass".

**Table 1**

| | | | | Ex. | Comp. Ex. | Ex. | Comp. Ex. | Ex. | Ex. | Ex. | Ex. | Comp. Ex. |
|---|---|---|---|---|---|---|---|---|---|---|---|---|
| | Number in parentheses denotes mol % of constituent monomer | | | 1 | 1 | 2 | 2 | 3 | 4 | 5 | 6 | 3 |
| Polymer (A) (mole number of olefin) | Compound 1 (50 mol %) | EHMA (50 mol %) | A-1 | 5.7 | | | | | | | | |
| | Compound 1 (10 mol %) | MMA (90 mol %) | A-2 | | | 2.0 | | | | | | |
| | Compound 2 (10 mol %) | MMA (90 mol %) | A-3 | | | | | 2.0 | | | | |
| | Compound 1 (10 mol %) | FA-512M (90 mol %) | A-4 | | | | | | 5.7 | | | |
| | Compound 1 (50 mol %) | FA-512M (50 mol %) | A-5 | | | | | | | 4.1 | | |
| | Compound 1 (100 mol %) | | A-6 | | | | | | | | 12.1 | |
| Polymer (E) (mole number of olefin) | FA-512M (50 mol %) | EHMA (50 mol %) | E-1 | | 4.4 | | | | | | | |
| | FA-512M (10 mol %) | MMA (90 mol %) | E-2 | | | | 2.0 | | | | | |
| | FA-512M (100 mol %) | | E-3 | | | | | | | | | 7.1 |
| Polythiol compound (B) (mols of thiol groups) | | | PETMP | 6.1 | 4.4 | 2.2 | 2.3 | 2.1 | 5.9 | 4.2 | 12.1 | 7.2 |
| [Moles of double bonds in polymer (A)]/[moles of thiol groups] | | | | 0.93 | 0.99 | 0.93 | 0.86 | 0.95 | 0.97 | 0.98 | 1.00 | 0.98 |
| Amount (g) in curable composition | Weight of (A) + (B) | | | 27.6 | 25.2 | 22.7 | 22.8 | 22.7 | 27.5 | 24.6 | 34.5 | 28.5 |
| | Solvent | | Toluene | 15.1 | 14.7 | 24.3 | 24.4 | 24.7 | 15.5 | 15.2 | 17.0 | 13.8 |
| | Radical polymerization initiator | | AIBN | 0.3 | 0.3 | 0.3 | 0.2 | 0.2 | 0.3 | 0.2 | 0.3 | 0.3 |
| Content (mass %) of polymer (A) and polythiol compound (B) in composition | | | | 64.2 | 62.7 | 48.0 | 48.1 | 47.7 | 63.5 | 61.5 | 66.6 | 66.9 |
| Evaluation | Solvent resistance (wiping test) | | | G | B | G | G | G | G | G | G | B |
| | Flex resistance mandrel diameter (mm) | | | <2 | | 16 | >32 | 5 | 25 | 10 | <2 | |
| | Pencil hardness | | | H | | 5H | 4H | 3H | B | H | F | |

In Table 1, "PETMP" represents pentaerythritol tetrakis(3-mercaptopropionate) (manufactured by FUJIFILM Wako Pure Chemical Corporation), and "AIBN" represents azobisisobutyronitrile (manufactured by FUJIFILM Wako Pure Chemical Corporation).

It is apparent from the results of Table 1 that a cured product, obtained by curing a curable composition according to the present invention, is excellent in solvent resistance and flex resistance. This indicates that the composition has good curability, and a cured product of the composition has good flexibility. Such advantageous properties are considered to be due to the special reactivity of residual double bonds in the polymer (A): The double bonds in the polymer (A) do not react in a radical polymerization reaction upon the production of a curable composition according to the present invention, whereas the double bonds react quickly and cause crosslinking in a thiol addition reaction which is a curing reaction. Thus, the composition has excellent curability. Because of the inclusion of the structural unit represented by the general formula (I) in the polymer (A), the mobility of the side chain of the polymer is high. In addition, C--S bond has a lower dissociation energy than C--O bond and C--C bond. Therefore, a dynamically crosslinked structure can be formed. A residual stress in a coating film after curing can therefore be reduced. The cured film can thus have excellent flexibility.

## Claims

1. A curable composition comprising a polymer (A) including a structural unit represented by the following general formula (I), and a polythiol compound (B) having at least two thiol groups in one molecule: 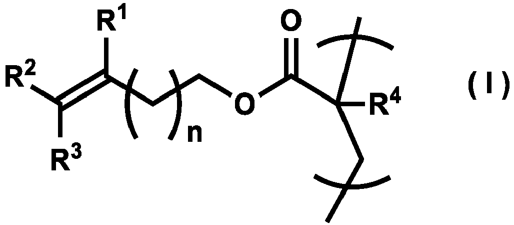 wherein R¹, R² and R³ each independently represent a hydrogen atom, an alkyl group having 1 to 18 carbon atoms, an alkenyl group having 2 to 18 carbon atoms or an aralkyl group having 7 to 18 carbon atoms, R⁴ represents a hydrogen atom or a methyl group, and n is an arbitrary integer equal to or greater than 0, and wherein at least one of R¹, R² and R³ is one of the above groups having one or more carbon atoms and/or n is an integer equal to or greater than 1.

2. The curable composition according to claim 1, wherein in the general formula (I), n is 1 to 5.

3. The curable composition according to claim 1 or 2, wherein in the general formula (I), R² and R³ are each a hydrogen atom.

4. The curable composition according to any one of claims 1 to 3, wherein in the general formula (I), R¹ is an alkyl group having 1 to 3 carbon atoms.

5. The curable composition according to claim 1, wherein the structural unit represented by the general formula (I) is a structural unit represented by the following general formula (II): 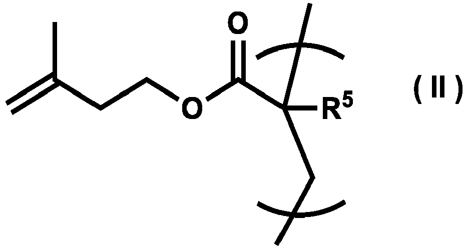 wherein R⁵ represents a hydrogen atom or a methyl group.

6. The curable composition according to any one of claims 1 to 5, wherein the polymer (A) includes a structural unit derived from a radical polymerizable monomer.

7. The curable composition according to any one of claims 1 to 6, further comprising a radical polymerization initiator (C).

8. A cured product obtained by curing the curable composition according to any one of claims 1 to 7.

## Patentansprüche

1. Härtbare Zusammensetzung, umfassend ein Polymer (A) mit einer durch die folgende allgemeine Formel (I) wiedergegebenen Struktureinheit und eine Polythiolverbindung (B) mit mindestens zwei Thiolgruppen in einem Molekül: 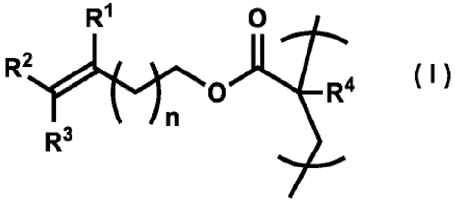 wobei R¹, R² und R³ jeweils unabhängig für ein Wasserstoffatom, eine Alkylgruppe mit 1 bis 18 Kohlenstoffatomen, eine Alkenylgruppe mit 2 bis 18 Kohlenstoffatomen oder eine Aralkylgruppe mit 7 bis 18 Kohlenstoffatomen stehen, R⁴ für ein Wasserstoffatom oder eine Methylgruppe steht und n für eine beliebige ganze Zahl gleich oder größer als 0 steht und wobei mindestens eines von R¹, R² und R³ für eine der obigen Gruppen mit einem oder mehreren Kohlenstoffatomen steht und/oder n für eine ganze Zahl gleich oder größer als 1 steht.

2. Härtbare Zusammensetzung nach Anspruch 1, wobei in der allgemeinen Formel (I) n für 1 bis 5 steht.

3. Härtbare Zusammensetzung nach Anspruch 1 oder 2, wobei in der allgemeinen Formel (I) R² und R³ jeweils für ein Wasserstoffatom stehen.

4. Härtbare Zusammensetzung nach einem der Ansprüche 1 bis 3, wobei in der allgemeinen Formel (I) R¹ für eine Alkylgruppe mit 1 bis 3 Kohlenstoffatomen steht.

5. Härtbare Zusammensetzung nach Anspruch 1, wobei es sich bei der durch die allgemeine Formel (I) wiedergegebenen Struktureinheit um eine durch die folgende allgemeine Formel (II) wiedergegebene Struktureinheit handelt: 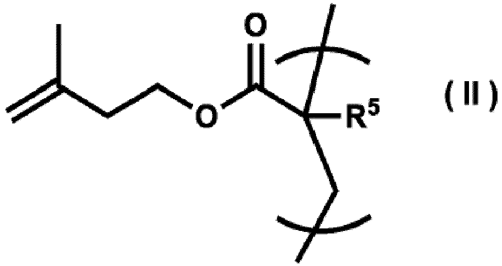 wobei R⁵ für ein Wasserstoffatom oder eine Methylgruppe steht.

6. Härtbare Zusammensetzung nach einem der Ansprüche 1 bis 5, wobei das Polymer (A) eine von einem radikalisch polymerisierbaren Monomer abgeleitete Struktureinheit enthält.

7. Härtbare Zusammensetzung nach einem der Ansprüche 1 bis 6, ferner umfassend einen radikalischen Polymerisationsinitiator (C).

8. Gehärtetes Produkt, erhalten durch Härten der härtbaren Zusammensetzung nach einem der Ansprüche 1 bis 7.

## Revendications

1. Composition durcissable comprenant un polymère (A) comprenant un motif structural représenté par la formule générale (I) suivante, et un composé de type polythiol (B) ayant au moins deux groupes thiol dans une molécule : 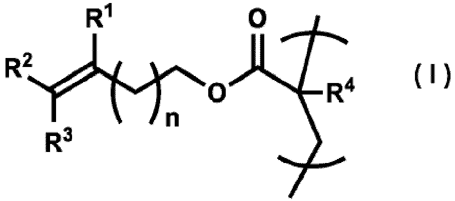 R¹, R² et R³ représentant chacun indépendamment un atome d'hydrogène, un groupe alkyle ayant 1 à 18 atomes de carbone, un groupe alcényle ayant 2 à 18 atomes de carbone ou un groupe aralkyle ayant 7 à 18 atomes de carbone, R⁴ représentant un atome d'hydrogène ou un groupe méthyle, et n étant un entier arbitraire égal ou supérieur à 0, et au moins l'un parmi R¹, R² et R³ étant l'un des groupes ci-dessus ayant un ou plusieurs atomes de carbone et/ou n étant un entier égal ou supérieur à 1.

2. Composition durcissable selon la revendication 1, dans la formule générale (I), n étant 1 à 5.

3. Composition durcissable selon la revendication 1 ou 2, dans la formule générale (I), R² et R³ étant chacun un atome d'hydrogène.

4. Composition durcissable selon l'une quelconque des revendications 1 à 3, dans la formule générale (I), R¹ étant un groupe alkyle ayant 1 à 3 atomes de carbone.

5. Composition durcissable selon la revendication 1, le motif structural représenté par la formule générale (I) étant un motif structural représenté par la formule générale (II) suivante : 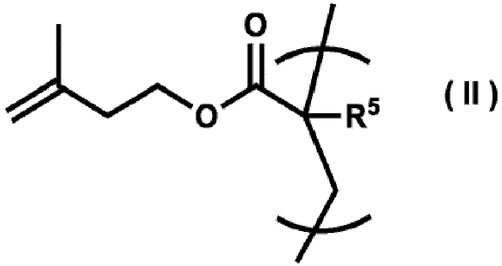 R⁵ représentant un atome d'hydrogène ou un groupe méthyle.

6. Composition durcissable selon l'une quelconque des revendications 1 à 5, le polymère (A) comprenant un motif structural issu d'un monomère polymérisable par voie radicalaire.

7. Composition durcissable selon l'une quelconque des revendications 1 à 6, comprenant en outre un initiateur de polymérisation radicalaire (C).

8. Produit durci obtenu par durcissement de la composition durcissable selon l'une quelconque des revendications 1 à 7.
